# EUROPÄISCHE PATENTSCHRIFT

(11) **EP 3 736 605 B1**
(45) Veröffentlichungstag und Bekanntmachung des Hinweises auf die Patenterteilung: **16.06.2021**
(21) Anmeldenummer: 20170153.9
(22) Anmeldetag: 17.04.2020
(51) Int. Cl.: G01S 17/42, G01S 7/497, G01S 17/88, G01S 7/481

(54) **SICHERHEITSLASERSCANNER UND VERFAHREN**
SAFETY LASER SCANNER AND METHOD
BALAYEUR LASER DE SÉCURITÉ ET PROCÉDÉ

(30) Priorität: 07.05.2019 DE 102019111852
(43) Veröffentlichungstag der Anmeldung: 11.11.2020
(73) Patentinhaber: SICK AG, 79183 Waldkirch (DE)
(72) Erfinder: Mißbach, Thomas, 79014 Freiburg (DE)

(56) Entgegenhaltungen:
- EP-A2- 2 112 527
- DE-C1- 4 341 080

## Beschreibung

Die Erfindung betrifft einen Sicherheitslaserscanner und Verfahren zur Erfassung von Objekten in einem Überwachungsbereich nach dem Oberbegriff von Anspruch 1 bzw. Anspruch 10.

In einem Laserscanner überstreicht ein von einem Laser erzeugter Lichtstrahl mit Hilfe einer Ablenkeinheit periodisch einen Überwachungsbereich. Das Licht wird an Objekten in dem Überwachungsbereich remittiert und in dem Laserscanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Für herkömmliche Laserscanner sind zwei grundsätzliche Prinzipien bekannt, die Lichtlaufzeit zu bestimmen. Bei phasenbasierten Verfahren wird das kontinuierliche Sendelicht moduliert und die Phasenverschiebung des empfangenen gegenüber dem gesendeten Licht ausgewertet. Bei pulsbasierten Verfahren oder Pulslaufzeitverfahren arbeitet der Sender in einem Einzelpulsbetrieb mit verhältnismäßig hohen Pulsenergien, und der Laserscanner misst Objektabstände anhand der Laufzeit zwischen dem Aussenden und Empfangen eines Einzellichtpulses. In einem beispielsweise aus der EP 2 469 296 B1 bekannten Pulsmittelungsverfahren werden für eine Messung eine Vielzahl von Einzelpulsen ausgesandt und die Empfangspulse statistisch ausgewertet.

Mit den Winkel- und Entfernungsangaben ist der Ort eines Objektes in dem Überwachungsbereich in zweidimensionalen Polarkoordinaten erfasst. Damit lassen sich die Positionen von Objekten ermitteln oder deren Kontur bestimmen. Die dritte Raumkoordinate kann durch eine Relativbewegung in Querrichtung ebenfalls erfasst werden, beispielsweise durch einen weiteren Bewegungsfreiheitsgrad der Ablenkeinheit in dem Laserscanner oder indem das Objekt relativ zu dem Laserscanner befördert wird. So können auch dreidimensionale Konturen ausgemessen werden.

Sicherheitslaserscanner werden nicht für allgemeine Messaufgaben, sondern in der Sicherheitstechnik beziehungsweise dem Personenschutz zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine vom Bedienpersonal nicht betreten werden darf. Erkennt der Sicherheitslaserscanner einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen. Sicherheitslaserscanner arbeiten in der Regel pulsbasiert.

Sicherheitslaserscanner müssen besonders zuverlässig arbeiten und deshalb hohe Sicherheitsanforderungen erfüllen, beispielsweise die Norm EN 13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie sichere elektronische Auswertung durch redundante, diversitäre Elektronik, Funktionsüberwachung oder speziell Überwachung der Verschmutzung optischer Bauteile, insbesondere einer Frontscheibe. Die Anforderungen an die Selbstdiagnose sind je nach Gefährdungspotential unterschiedlich hoch, was beispielsweise durch sogenannte Performancelevel ausgedrückt wird.

Eine der Maßnahmen zur Erfüllung der einschlägigen Normen ist die Verwendung eines internen Referenzziels, mit dessen Hilfe die fehlerfreie Abstandsmessung und deren unbeeinträchtigte Empfindlichkeit überprüft werden. Das Referenzziel wird in jedem Umlauf der Ablenkeinheit optisch angetastet und das Signalecho im Hinblick auf Signalstärke und Abstandswert ausgewertet. Fällt dieser Selbsttest negativ aus, schaltet das Gerät sicherheitsgerichtet ab. Es ist üblich, einen zusammenhängenden Winkelbereich exklusiv für die Referenzzielmessung zu verwenden. In diesem Winkelbereich befindet sich auch der Träger, an dem die Ablenkeinheit mit Motor, Drehspiegel und Winkelencoder aufgehängt ist.

Ein Selbsttest kann prinzipiell Fehlern erster und zweiter Art unterliegen. Ein Fehler erster Art wäre, dass das System nicht mehr funktioniert, der Selbsttest dies aber nicht aufdeckt. Das ist bei einem Sicherheitssystem unbedingt zu vermeiden. Eine typische Forderung ist die Einfehlersicherheit, d.h. das System erkennt einen derartigen Fehler nur in dem extrem unwahrscheinlichen Fall nicht, dass zufällig gleichzeitig zwei Fehler auftreten, die nicht auf eine gemeinsame Ursache zurückgehen. Ein Fehler zweiter Art bedeutet, dass eine sicherheitsgerichtete Abschaltung erfolgt, obwohl das System objektiv noch voll funktionsfähig ist. Das ist niemals ein Sicherheitsproblem und dadurch wesentlich unkritischer, verringert aber die Verfügbarkeit und führt zu unerwünschten und kostenträchtigen Stillständen sowie zu an sich unnötigen Reparaturen oder Gerätetausch.

Die EP 0 843 180 B1 offenbart einen Sicherheitslaserscanner mit einem speziellen, mehrteiligen, internen Referenzziel, das mehrere Einzelziele umfasst, die jeweils unterschiedlich starke Remissionseigenschaften haben. Damit können Probleme aufgrund der enormen Signaldynamik besser beherrscht werden, denn mit den verschiedenen Einzelzielen kann diese Signaldynamik nachgebildet, getestet und damit kontrolliert werden. Weitere Problemfälle können damit nicht erfasst werden.

Die DE 4341080 C1 zeigt einen Laserscanner mit internem Referenzziel. Abhängig davon, ob genügend Licht vom Referenzziel empfangen wird, wird ein Fehler ausgegeben. In EP 2112527 A2 ist ein internes Referenzziel beschrieben, das eine über den Scanwinkel unterschiedliche Remission zeigt. Diese Remission unterschiedlicher Höhe dient der Kalibrierung und nicht der Funktionsüberprüfung des Scanners.

Es ist Aufgabe der Erfindung, einen Sicherheitslaserscanner mit erweiterter Nutzung der Referenzzielmessung zur verbesserten Überwachung der Funktionen des Laserscanners, anzugeben.

Vorrichtungsgemäß wird diese Aufgabe durch einen Sicherheitslaserscanner zur Erfassung von Objekten in einem Überwachungsbereich nach Anspruch 1 gelöst.

Ein erfindungsgemäßer Sicherheitslaserscanner ist ein sicherer Laserscanner im Sinne einer Sicherheitsnorm wie einleitend beschrieben und darf deshalb zum Personenschutz an Gefahrenquellen eingesetzt werden. Der Sicherheitslaserscanner weist einen Lichtsender zum Aussenden eines Lichtstrahls in den Überwachungsbereich, einen Lichtempfänger zum Erzeugen eines Empfangssignals aus dem von den Objekten remittierten Lichtstrahl, eine drehbare Ablenkeinheit zur periodischen Ablenkung des Lichtstrahls, um im Verlauf der Bewegung den Überwachungsbereich abzutasten, ein internes Referenzziel, das den ausgesandten Lichtstrahl innerhalb des Sicherheitslaserscanners zu dem Lichtempfänger zurückwirft, um ein Referenzsignal zu erzeugen und eine Steuer- und Auswertungseinheit auf, die dafür ausgebildet ist, Objekte anhand des Empfangssignals zu erfassen sowie die Funktionsfähigkeit des Sicherheitslaserscanners anhand des Referenzsignals zu prüfen.

Erfindungsgemäß ist die Steuer- und Auswertungseinheit dafür ausgebildet, eine Intensitätsverteilung des Referenzsignals beim Überstreichen des Lichtstrahls über das eine Referenzziel zu erfassen und weiter ausgebildet, bei Abweichung der Form der Intensitätsverteilung des Referenzsignals von einer vordefinierten Referenzform der Intensitätsverteilung über eine vorbestimmte Toleranz hinaus, ein Warnsignal auszugeben. Weiter ist die Steuer- und Auswertungseinheit ausgebildet, aus der Intensitätsverteilung ein Maß für eine Betauung des Referenzziels abzuleiten und das Warnsignal ist ein Signal, dass den Feuchtegrad im Inneren des Sicherheitslaserscanners wiedergibt.

Die Erfindung geht von dem Grundgedanken aus, das Referenzsignal nicht nur zum Überwachen beziehungsweise für den Selbsttest des Scanners zu nutzen, sondern zusätzlich auch eine Form der Intensitätsverteilung beim Überstreichen des Lichtstrahls über das Referenzziel zu erfassen und auszuwerten. Dadurch kann nämlich beispielsweise erkannt werden, ob eine Betauung des Referenzziels besteht, also ob Feuchtigkeit im Inneren des Sicherheitslaserscanners vorhanden bzw. eingetreten ist. Feuchtigkeit ist unerwünscht, denn durch Feuchtigkeit kann der Betrieb gefährdet sein, die Funktionsfähigkeit oder Lebensdauer interner Komponenten, insbesondere optischer und elektronischer Komponenten, ist dann reduziert.

Die Feuchtigkeit kann anhand der Form der Intensitätsverteilung erkannt werden, denn durch Betauung an optischen Elementen wird die durch das optische System
vorgegebene Intensitätsverteilung verwaschen, also verbreitert, aufgrund der Lichtstreuung durch die Wassertröpfchen. Dieser Effekt der Veränderung der Form der Intensitätsverteilung und deren Nutzung bei der Erfassung und Auswertung des Referenzsignals ist ein wesentliches Element der Erfindung.

Damit kann mittels des Referenzsignals eine zusätzliche, weitere Überprüfung, nämlich die ob und wieviel Feuchtigkeit vorhanden ist, also ob und wie stark Kondensation auf dem Referenzziel, der Linsen- und/oder Spiegeloptik im Inneren des Scanners vorliegt, erfolgen. Weitere Vorteile sind eine Verbesserung der Wartbarkeit, da überprüft werden kann ob es im Gerät zu Betauung kam, die Möglichkeit der Abschätzung von Wartungsintervallen (Predictive Maintenance), der Nachweis des sachgemäßen Einsatzes im Fehlerfall und die Aufzeichnung von Umweltdaten zur Optimierung von Anlagen und Maschinen. Die Aufgabe ist damit gelöst.

Bisher war eine Feuchtigkeitsbestimmung im Inneren eines Laserscanners nur mit zusätzlichen Komponenten möglich, mit zusätzlicher Sensorik wie in DE 20 2012 101 007 U1 beschrieben oder wurde gar nicht erfasst, sondern anhand zusätzlicher Maßnahmen vermieden, durch Vorsehen einer Heizung und/oder einer Kondensationsfalle wie in DE 10 2014 190 618 A1 beschrieben.

Über die Form der Intensitätsverteilung kann sogar eine zumindest qualitative Aussage über den Grad der Betauung erfolgen, denn je mehr Feuchtigkeit auf dem Referenzziel kondensiert ist, desto flacher ist die Verteilung. Damit kann aus der Intensitätsverteilung ein Maß für die Betauung des Referenzziels abgeleitet werden. Das Warnsignal kann somit den Feuchtegrad im Inneren des Sicherheitslaserscanners wiedergeben.

Die Form der Intensitätsverteilung ist bestimmt durch den Querschnitt des Lichtstrahls und die Apertur des Referenzziels. Es ist sinnvoll die Referenzform bei der Herstellung des Sicherheitslaserscanners in einem Einlernverfahren aufzunehmen und in der Steuer- und Auswerteeinheit zu speichern. In einem solchen Einlernverfahren kann auch die Toleranz eingegeben bzw. abgespeichert werden, die die aktuell gemessene Form von der Referenzform haben darf, innerhalb dessen noch keine Warnmeldung erfolgt.

Das Referenzziel ist vorteilhafterweise als als Lichtleiter ausgebildet ist, wobei die Einkoppelfläche die Apertur bildet, die der Lichtstrahl überstreicht. Der Lichtleiter leitet das eingekoppelte Licht auf den Lichtempfänger. In dieser Ausbildung ist es im Prinzip nicht wichtig, wo die Apertur des Referenzziels genau angeordnet ist, was für die Positionierung von Lichtsender und Lichtempfänger vorteilhaft sein kann.

In einer einfachen Ausführungsform ist das Referenzziel als ebenes Ziel mit gleichförmigem Reflektionsgrad ausgebildet. Das Licht wird dann am Referenzziel schlicht reflektiert oder remittiert und auf den Lichtempfänger abgebildet.

Zusätzlich kann ein typischer weise funktional nicht sicherer preisgünstiger Feuchtesensor beispielsweise nach dem kapazitiven oder resistiven Prinzip zum Einsatz kommen. Aus dem Verbund von Referenzziel-basierter Feuchtigkeitsmessung bzw. Taupunktbestimmung und Feuchtesensor ist es möglich den Feuchtigkeitsgehalt bei allen Temperaturarbeitspunkten zu quantifizieren. Dabei liefert der zusätzliche Sensor ein Signal zur quantitativen Auswertung und die Auswertung der Referenzzielmesskurve dient der funktional sicheren qualitativen Validierung.

Der Sicherheitslaserscanner ist bevorzugt als Entfernungsmesser ausgebildet, indem die Steuer- und Auswertungseinheit die Lichtlaufzeit zwischen Aussenden und Empfang des Lichtstrahls und daraus die Entfernung eines Objekts bestimmt. Damit können wesentlich genauere Objektinformationen gewonnen werden als durch bloße Feststellung der Anwesenheit von Objekten. Vorzugsweise ist eine Winkelmesseinheit zur Erfassung der Winkelstellung der Ablenkeinheit vorgesehen. Insgesamt stehen dann für erfasste Objekte vollständige zweidimensionale Positionskoordinaten zur Verfügung. Im Falle eines räumlich ausgedehnten Überwachungsbereichs wird auch der jeweilige Kippwinkel der Abtasteinheit erfasst, sodass insgesamt dreidimensionale Kugelkoordinaten erhalten werden, welche die Objektposition innerhalb des Überwachungsbereichs ebenfalls vollständig beschreiben.

Die Steuer- und Auswertungseinheit ist bevorzugt dafür ausgebildet, beim Prüfen der Funktionsfähigkeit den Abstand zu dem internen Referenzziel zu messen. Damit wird auch die Entfernungsmessung geprüft, die bei korrekt arbeitendem Sicherheitslaserscanner für das Referenzziel die erwartete Entfernung ergibt. Dazu wird insbesondere das Referenzsignal ebenso ausgewertet wie ein Empfangssignal. Für den Messkern ist es kein Unterschied, ob der ausgesandte Lichtstrahl außen an einem Messobjekt oder intern an dem Referenzziel zurückgeworfen wird. Es ist nur beispielsweise wegen des aktuellen Stellwinkels der Ablenkeinheit entsprechend dem Totwinkelbereich mit dem Referenzziel bekannt, dass es sich um eine Referenzmessung handelt.

Der Sicherheitslaserscanner weist bevorzugt einen Sicherheitsausgang auf, wobei die Steuer- und Auswertungseinheit dafür ausgebildet ist zu bestimmen, ob sich ein Objekt in einem Schutzfeld innerhalb des Überwachungsbereichs befindet, und daraufhin ein sicherheitsgerichtetes Abschaltsignal über den Sicherheitsausgang auszugeben. Damit ist die Sicherheitsauswertung bereits in den Sicherheitslaserscanner integriert, der direkt ein sicherheitsgerichtetes Abschaltsignal für eine Maschine oder eine zwischengeschaltete Sicherheitssteuerung bereitstellt.

Die Steuer- und Auswertungseinheit ist bevorzugt dafür ausgebildet, ein sicherheitsgerichtetes Abschaltsignal über den Sicherheitsausgang auszugeben, wenn das Prüfen der Funktionsfähigkeit keine fehlerfreie Funktion ergibt. Damit erfolgt die Sicherheitsabschaltung ebenso wie im Falle eines Objekteingriffs in ein Schutzfeld auch dann, wenn der Selbsttest über die Referenzzielmessung ein Problem aufdeckt. Das kann ein in falscher Entfernung gemessenes Referenzziel sein oder durch die Veränderung der Form der Verteilung detektierte Feuchtigkeit.

Verfahrensgemäß wird die Aufgabe gelöst durch ein Verfahren zur Erfassung von Objekten in einem Überwachungsbereich mit einem Sicherheitslaserscanner und umfasst die Schritte:
- Aussenden eines Lichtstrahls in den Überwachungsbereich mit einem Lichtsender,
- Erzeugen eines Empfangssignals aus dem von den Objekten remittierten Lichtstrahl mit einem Lichtempfänger,
- periodisches Ablenken des Lichtstrahls mit einer drehbaren Ablenkeinheit, um im Verlauf der Bewegung den Überwachungsbereich abzutasten,
- Erzeugen eines Referenzsignals mittels eines internen Referenzziels, das den ausgesandten Lichtstrahl innerhalb des Sicherheitslaserscanners zu dem Lichtempfänger zurückwirft,
- Erfassen von Objekten anhand des Empfangssignals sowie Prüfen der Funktionsfähigkeit des Sicherheitslaserscanners anhand des Referenzsignals mittels einer Steuer- und Auswertungseinheit,
- Erfassen einer Intensitätsverteilung des Referenzsignals beim Überstreichen des Lichtstrahls über das eine Referenzziel,
- Ableiten eines Maß für eine Betauung des Referenzziels aus der Intensitätsverteilung,
- Ausgeben eines Warnsignals, das den Feuchtegrad im Inneren des Sicherheitslaserscanners wiedergibt, bei Abweichung der Form der Intensitätsverteilung des Referenzsignals von einer vordefinierten Referenzform der Intensitätsverteilung über eine vorbestimmte Toleranz hinaus.

Durch eine zusätzliche Erfassung der Temperatur im Gerät, kann auf den Taupunkt und damit die Luftfeuchte im Gerät geschlossen werden. Das Warnsignal kann so um einen quantitativen Wert erweitert werden, was insbesondere im Sinne einer Predictive Maintanance sinnvoll ist.

Die Erfindung wird nachstehend auch hinsichtlich weiterer Merkmale und Vorteile beispielhaft anhand von Ausführungsformen und unter Bezug auf die beigefügte Zeichnung näher erläutert. In der Zeichnung zeigen:
- Fig. 1 und 2: schematische Schnittdarstellungen eines Sicherheitslaserscanners mit unterschiedlicher Stellung der Ablenkeinheit;
- Fig. 3: mehrere Formen der Intensitätsverteilung bei unterschiedlichem Feuchtigkeitsniederschlag auf dem Referenzziel.

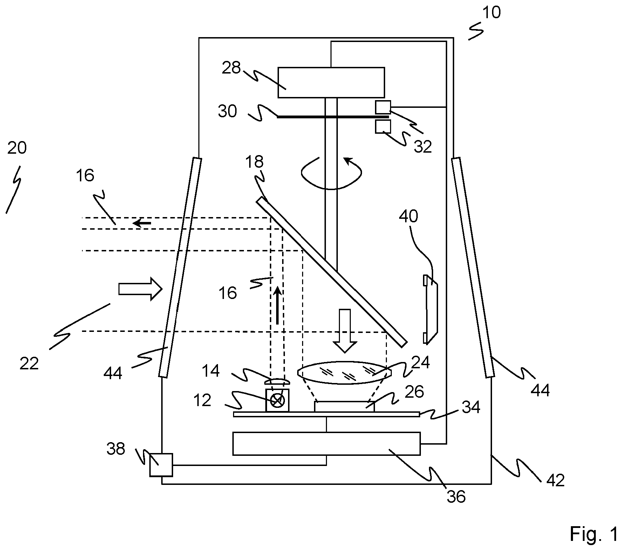

Fig. 1 zeigt eine schematische Schnittdarstellung durch einen Sicherheitslaserscanner 10. Sicherheitslaserscanner 10 bedeutet, dass ein Einsatz im Personenschutz möglich ist, also Maßnahmen entsprechend der einleitend genannten Normen getroffen sind, die einen unentdeckten Ausfall der Funktion entsprechend dem Sicherheitsniveau oder Performancelevel ausschließen.

Ein Lichtsender 12, beispielsweise mit einer Laserlichtquelle, erzeugt mit Hilfe einer Sendeoptik 14 einen Sendelichtstrahl 16, der an einer Ablenkeinheit 18 in einen Überwachungsbereich 20 umgelenkt wird. Fällt der Sendelichtstrahl 16 in dem Überwachungsbereich 20 auf ein Objekt, so gelangt remittiertes Licht 22 wieder zu dem Sicherheitslaserscanner 10 zurück und wird dort über die Ablenkeinheit 18 und mittels einer Empfangsoptik 24 von einem Lichtempfänger 26 detektiert, beispielsweise einer Photodiode oder einer APD (Avalanche Photo Diode).

Die Ablenkeinheit 18 ist in dieser Ausführungsform als Drehspiegel ausgestaltet, die durch Antrieb eines Motors 28 kontinuierlich rotiert. Die jeweilige Winkelstellung des Motors 28 beziehungsweise der Ablenkeinheit 18 wird über einen Encoder erkannt, der beispielsweise eine Codescheibe 30 und eine Gabellichtschranke 32 umfasst. Der von dem Lichtsender 12 erzeugte Sendelichtstrahl 16 überstreicht somit den durch die Rotationsbewegung erzeugten Überwachungsbereich 20. Anstelle eines Drehspiegels ist es auch möglich, die Ablenkeinheit 18 als rotierenden Optikkopf auszubilden, in dem Lichtsender 12 und/oder Lichtempfänger 26 und möglicherweise weitere Elemente untergebracht sind. Auch die Gestaltung von Sendeoptik 14 und Empfangsoptik 24 kann variiert werden, etwa über einen strahlformenden Spiegel als Ablenkeinheit, eine andere Anordnung der Linsen oder zusätzliche Linsen. Insbesondere sind Sicherheitslaserscanner auch in einer koaxialen Anordnung bekannt, also mit gemeinsamer optischer Achse von Lichtsender 12 und Lichtempfänger 26. In der dargestellten Ausführungsform sind Lichtsender 12 und Lichtempfänger 26 zusammen auf einer Leiterkarte 34 untergebracht. Auch das ist nur ein Beispiel, denn es können eigene Leiterkarten sowie andere Anordnungen beispielsweise mit einem gegenseitigen Höhenversatz vorgesehen sein.

Wird nun von dem Lichtempfänger 26 remittiertes Licht 22 aus dem Überwachungsbereich 20 empfangen, so kann aus der von dem Encoder 30, 32 gemessenen Winkelstellung der Ablenkeinheit 18 auf die Winkellage des Objektes in dem Überwachungsbereich 20 geschlossen werden. Zusätzlich wird vorzugsweise die Lichtlaufzeit von Aussenden eines Lichtsignals bis zu dessen Empfang nach Reflexion an dem Objekt in dem Überwachungsbereich 20 ermittelt und unter Verwendung der Lichtgeschwindigkeit auf die Entfernung des Objektes von dem Sicherheitslaserscanner 10 geschlossen.

Diese Auswertung erfolgt in einer Auswerteeinheit 36, die dafür mit dem Lichtsender 12, dem Lichtempfänger 26, dem Motor 28 und dem Encoder 32 verbunden ist. Somit stehen über den Winkel und die Entfernung zweidimensionale Polarkoordinaten aller Objekte in dem Überwachungsbereich 20 zur Verfügung. In sicherheitstechnischen Anwendungen prüft die Auswertungseinheit 36, ob ein unzulässiges Objekt in einen innerhalb des Überwachungsbereichs 20 festgelegten Schutzbereich eingreift. Ist das der Fall, wird über einen Sicherheitsausgang 38 (OSSD, Output Signal Switching Device) ein Absicherungssignal an eine überwachte Gefahrenquelle, beispielsweise eine Maschine ausgegeben. Es kann zusätzliche, nicht dargestellte Schnittstellen zur Ausgabe von rohen oder vorverarbeiteten Messdaten oder beispielsweise zum Parametrieren des Sicherheitslaserscanners 10 geben.

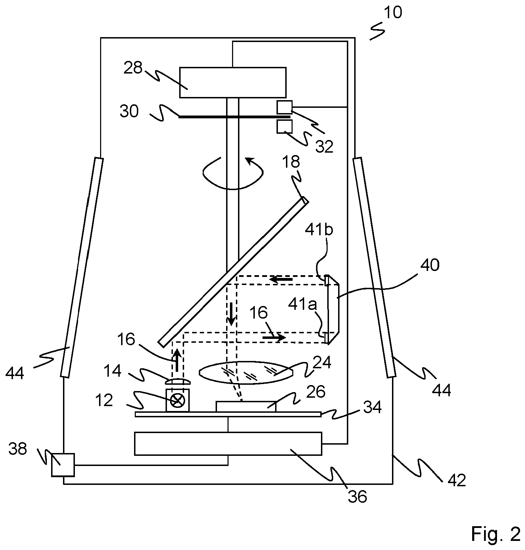

Für einen Selbsttest der Funktionsfähigkeit des Sicherheitslaserscanners 10 ist ein Referenzziel 40 in einem Winkelbereich des Sicherheitslaserscanners 10 angeordnet, der in der Fig. 1 gerade um 180° versetzt zu Sendelichtstrahl 16 und remittiertem Licht 22 aus Fig. 1 dargestellt ist. Wenn die Ablenkeinheit 18 im Verlauf ihrer Drehbewegung entsprechende Winkelstellungen einnimmt, verlässt der Sendelichtstrahl 16 den Sicherheitslaserscanner 10 nicht, sondern wird innerhalb des Sicherheitslaserscanners 10 von dem Referenzziel 40 zurückgeworfen, wie dies in Fig. 2 dargestellt ist. Der Lichtstrahl 16 trifft dann bei einem bestimmten Winkel α auf eine Apertur bzw. Einkoppelfläche 41a des Referenzziels 40. Das Referenzziel 40 ist in diesem Ausführungsbeispiel als Lichtleiter ausgebildet. Von der Apertur 41a wird der Lichtstrahl durch den Lichtleiter zu einem Lichtausgang 41b geführt und verlässt das Referenzziel in Richtung der Ablenkeinheit 18 und wird von dieser auf den Empfänger umgelenkt. Das Referenzziel 40 ist hier als Lichtleiter ausgebildet, damit der Lichtstrahl 16 mit einem Versatz reflektiert wird, damit er auf den Empfänger 26 trifft. Der Lichtempfänger 26 erzeugt in diesem Fall kein Empfangssignal zum Erfassen von Objekten in dem Überwachungsbereich 20, sondern ein Referenzsignal, das üblicherweise für eine Funktionsüberprüfung genutzt wird.

In dem Winkelbereich, den das Referenzziel 40 einnimmt, liegt ein Totbereich der Messung, so dass der Sicherheitslaserscanner 10 keinen vollen Winkelbereich von 360° erfassen kann. In diesem Totbereich können auch wie dargestellt Leitungen geführt oder bei alternativen Anordnungen des Motors dessen Aufhängung untergebracht sein. Alle genannten Funktionskomponenten sind in einem Gehäuse 42 angeordnet, das im Bereich des Lichtaus- und Lichteintritts eine Frontscheibe 44 aufweist.

Wie schon einleitend erläutert, wird das Referenzsignal ausgewertet, um einerseits die Funktionsfähigkeit des Sicherheitslaserscanners 10 zu prüfen. Dieser Test findet vorzugsweise in kurzen Zyklen einmal je Umlauf der Ablenkeinheit 18 statt. Wenn die Steuer- und Auswertungseinheit das Referenzziel 40 nicht in der erwarteten Entfernung misst, so ist das ein Fehler, und der Sicherheitslaserscanner 10 geht in den Absicherungszustand mit Ausgabe eines sicherheitsgerichteten Abschaltsignals an dem Sicherheitsausgang 38.

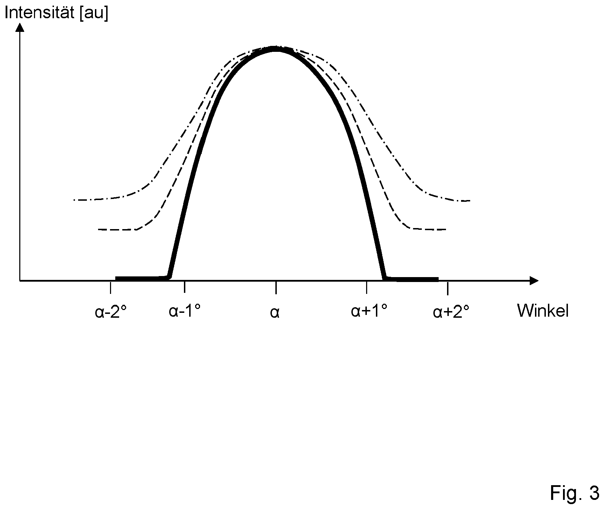

Andererseits wird das Referenzsignal nach der Erfindung beobachtet, erfasst und ausgewertet wie nachfolgend beschrieben:
Während der Drehung der Ablenkeinheit 18 überstreicht der Lichtstrahl 16 die Apertur 41a des Referenzziels 40. Der zeitliche Intensitätsverlauf, der bei gleichförmiger Rotation, die in der Regel vorliegt, einer konstanten Winkeländerung entspricht, den der Lichtempfänger 26 sieht, hat einen qualitativen Verlauf, wie er in Fig. 3 mit Bezugszeichen 60 dargestellt ist. Der genaue quantitative Verlauf ist abhängig von den geometrischen Verhältnissen, wie Größe und Form der Apertur und Durchmesser des Lichtstrahls 16. Dies ist der Normalfall, also ohne Störungen. Der Verlauf ist grob gaußförmig. Die Intensitätsverteilung 60 für diesen ungestörten Normalfall wird als Referenzform der Intensitätsverteilung bezeichnet.

Tritt nun aber ein Feuchtigkeitsniederschlag, also eine Betauung im Inneren des Gehäuses 42 auf und damit auch auf dem Referenzziel 40, dann wird ein Teil des Sendelichts 16 gestreut und/oder aufgeweitet. Es ergeben sich dann je nach Feuchtigkeitsgehalt Intensitätsverläufe wie sie mit Bezugszeichen 62 und 64 dargestellt sind, wobei die gaußförmige Verteilung breiter wird, je höher höher der Feuchtigkeitsgehalt ist. Insbesondere die Randbereiche der Verteilungen steigen mit zunehmender Feuchtigkeit an, da vermehrt Licht durch Feuchtigkeit gestreut wird. Im Grenzfall sehr hoher Feuchtigkeit liegt sogar eine annähernde Gleichverteilung über den Winkelbereich vor. Dann würde das Sendelicht 16 in jeder Winkelstellung der Ablenkeinheit von der Feuchtigkeit, die sich auf Komponenten im jeweiligen Strahlengang niedergeschlagen hat, reflektiert bzw. remittiert.

Die Intensitätsverteilungen 60, 62, 64 werden von der Steuer- und Auswerteeinheit 36 erfasst, aufgezeichnet und ausgewertet. In der Auswertung wird dabei geprüft, ob die Abweichung einer aktuell erfassten Form einer Intensitätsverteilung, z.B. 62 oder 64, von der Referenzform 60 über ein vorbestimmtes Maß, also eine vorbestimmte Toleranz, hinausgeht. Ist das der Fall, dann liegt ein nicht mehr tolerierbarer Feuchtigkeitsgehalt vor und es wird ein Warnsignal von der Steuer- und Auswerteinheit ausgegeben. Dieses Warnsignal kann ein Signal nach außen sein, damit ein Servicepersonal den Sicherheitslaserscanner 10 reinigt/entfeuchtet. Es könnte aber auch schlicht ein internes Signal sein, das z.B. eine Heizung steuert oder zum Auswechseln einer optionalen Trockenmittelkartusche auffordert.

Wenn beansprucht ist, dass "bei Abweichung der Form der Intensitätsverteilung des Referenzsignals von einer vordefinierten Referenzform der Intensitätsverteilung über eine vorbestimmte Toleranz hinaus" dann soll damit auch gemeint sein, dass die Intensität nur in einem Randbereich der Verteilung geprüft wird. Z.B. könnte es nach dem Ausführungsbeispiel der Fig. 3 ausreichen, nur bei a+2° oder α-2° die Intensität zu erfassen, denn dort sind die Unterscheide mit und ohne Feuchtigkeit am deutlichsten. Wenn also dort die (punktuelle) Intensitätsmessung eine Abweichung über eine Toleranz hinaus ergibt, wird das Warnsignal ausgegeben.

Da wie bereits oben erläutert die Form der Intensitätsverteilung 62, 64 von dem Feuchtegrad, also wieviel Feuchtigkeit sich niedergeschlagen hat, abhängt, ist bevorzugt die Steuer- und Auswertungseinheit 36 ausgebildet, aus der erfassten Intensitätsverteilung 62, 64 ein Maß für eine Betauung des Referenzziels 40 und damit für den Feuchtegehalt im Inneren des Gehäuses 42, abzuleiten. Das Warnsignal kann somit den Feuchtegrad im Inneren des Sicherheitslaserscanners wiedergeben und nach außen kommunizieren.

Die Referenzform 60 der Intensitätsverteilung ist wie erläutert abhängig von geometrischen Verhältnissen. Es ist deshalb sinnvoll für einen bestimmten Sicherheitslaserscanner 10 die Referenzform in einem Einlernverfahren, bevorzugt im Rahmen der Herstellung, einzulernen und abzuspeichern. Bei dieser Prozedur kann auch die Toleranz festgelegt werden, die somit angibt, ab welchem Feuchtigkeitsgehalt bzw. Betauungsgrad das Warnsignal ausgegeben werden soll.

Alternativ wäre es auch denkbar, die Toleranz später im Rahmen einer Parametrisierung des Sicherheitslaserscanners 10 für jeden Anwendungsfall individuell vorzugeben.

Das Referenzziel 40 muss nicht zwingend als Lichtleiter ausgebildet sein. Der Lichtleiter ist nur in dem dargestellten Ausführungsbeispiel gewählt, weil Sender 12 und Empfänger 26 nebeneinander angeordnet sind. Bei anderen Anordnungen kann auch ein einfacher Reflektor als Referenzziel dienen. Er muss lediglich beim Überstreichen mit dem Lichtstrahl 16 qualitativ eine Intensitätsverteilung mit einer Referenzform vorliegen.

## Patentansprüche

1. Sicherheitslaserscanner (10) zur Erfassung von Objekten in einem Überwachungsbereich (20), mit einem Lichtsender (12) zum Aussenden eines Lichtstrahls (16) in den Überwachungsbereich (20), einem Lichtempfänger (26) zum Erzeugen eines Empfangssignals aus dem von den Objekten remittierten Lichtstrahl (22), einer drehbaren Ablenkeinheit (18) zur periodischen Ablenkung des Lichtstrahls (16, 22), um im Verlauf der Bewegung den Überwachungsbereich (20) abzutasten, einem internen Referenzziel (40), das den ausgesandten Lichtstrahl (16) innerhalb des Sicherheitslaserscanners (10) zu dem Lichtempfänger (26) zurückwirft, um ein Referenzsignal zu erzeugen, und mit einer Steuer- und Auswertungseinheit (36), die dafür ausgebildet ist, Objekte anhand des Empfangssignals zu erfassen sowie die Funktionsfähigkeit des Sicherheitslaserscanners (10) anhand des Referenzsignals zu prüfen,
**dadurch gekennzeichnet,**
**dass** die Steuer- und Auswertungseinheit (36) dafür ausgebildet ist, eine Intensitätsverteilung des Referenzsignals beim Überstreichen des Lichtstrahls über das eine Referenzziel zu erfassen und weiter ausgebildet ist, bei Abweichung der Form der Intensitätsverteilung des Referenzsignals von einer vordefinierten Referenzform der Intensitätsverteilung über eine vorbestimmte Toleranz hinaus, ein Warnsignal auszugeben und dass die Steuer- und Auswertungseinheit (36) ausgebildet ist, aus der Intensitätsverteilung ein Maß für eine Betauung des Referenzziels abzuleiten und das Warnsignal ein Signal ist, dass den Feuchtegrad im Inneren des Sicherheitslaserscanners wiedergibt.

2. Sicherheitslaserscanner (10) nach Anspruch 1, **dadurch gekennzeichnet, dass** das Referenzziel als Lichtleiter ausgebildet ist, wobei der Lichtstrahl eine Einkoppelfläche des Lichtleiters überstreicht und der Lichtleiter das eingekoppelte Licht auf den Lichtempfänger leitet.

3. Sicherheitslaserscanner (10) nach Anspruch 1, **dadurch gekennzeichnet, dass** das Referenzziel als ebenes Ziel mit gleichförmigem Reflektionsgrad ausgebildet ist und das Licht auf den Lichtempfänger reflektiert oder remittiert.

4. Sicherheitslaserscanner (10) einem der vorhergehenden Ansprüche, **dadurch gekennzeichnet, dass** in einem Einlernverfahren die Toleranz bestimmt wird.

5. Sicherheitslaserscanner (10) nach einem der vorhergehenden Ansprüche, der als Entfernungsmesser ausgebildet ist, indem die Steuer- und Auswertungseinheit (36) die Lichtlaufzeit zwischen Aussenden und Empfangen des Lichtstrahls (16, 22) erfasst und daraus die Entfernung eines Objekts bestimmt und wobei eine Winkelmesseinheit (30, 32) zur Erfassung der Winkelstellung der Ablenkeinheit (18) vorgesehen ist.

6. Sicherheitslaserscanner (10) nach einem der vorhergehenden Ansprüche, **dadurch gekennzeichnet, dass** die Steuer- und Auswertungseinheit (36) dafür ausgebildet ist, beim Prüfen der Funktionsfähigkeit den Abstand zu dem internen Referenzziel (40) zu messen.

7. Sicherheitslaserscanner (10) nach einem der vorhergehenden Ansprüche, der einen Sicherheitsausgang (38) aufweist, **dadurch gekennzeichnet, dass** die Steuer- und Auswertungseinheit (36) dafür ausgebildet ist zu bestimmen, ob sich ein Objekt in einem Schutzfeld innerhalb des Überwachungsbereichs (20) befindet, um daraufhin ein sicherheitsgerichtetes Schaltsignal über den Sicherheitsausgang (38) auszugeben.

8. Sicherheitslaserscanner (10) nach Anspruch 7, **dadurch gekennzeichnet, dass** die Steuer- und Auswertungseinheit (36) dafür ausgebildet ist, das sicherheitsgerichtete Schaltsignal über den Sicherheitsausgang (38) auszugeben, wenn das Prüfen der Funktionsfähigkeit keine fehlerfreie Funktion ergibt.

9. Verfahren zur Erfassung von Objekten in einem Überwachungsbereich (20) mit einem Sicherheitslaserscanner (10) umfassend die Schritte:
- Aussenden eines Lichtstrahls (16) in den Überwachungsbereich (20) mit einem Lichtsender (12),
- Erzeugen eines Empfangssignals aus dem von den Objekten remittierten Lichtstrahl (22) mit einem Lichtempfänger (26),
- periodisches Ablenken des Lichtstrahls (16, 22) mit einer drehbaren Ablenkeinheit (18), um im Verlauf der Bewegung den Überwachungsbereich (20) abzutasten,
- Erzeugen eines Referenzsignals mittels eines internen Referenzziels (40), das den ausgesandten Lichtstrahl (16) innerhalb des Sicherheitslaserscanners (10) zu dem Lichtempfänger (26) zurückwirft,
- Erfassen von Objekten anhand des Empfangssignals sowie Prüfen der Funktionsfähigkeit des Sicherheitslaserscanners (10) anhand des Referenzsignals mittels einer Steuer- und Auswertungseinheit (36),
**gekennzeichnet durch,**
- Erfassen einer Intensitätsverteilung des Referenzsignals beim Überstreichen des Lichtstrahls über das eine Referenzziel,
- Ableiten eines Maß für eine Betauung des Referenzziels aus der Intensitätsverteilung,
- Ausgeben eines Warnsignals, das den Feuchtegrad im Inneren des Sicherheitslaserscanners wiedergibt, bei Abweichung der Form der Intensitätsverteilung des Referenzsignals von einer vordefinierten Referenzform der Intensitätsverteilung über eine vorbestimmte Toleranz hinaus.

## Claims

1. A safety laser scanner (10) for detecting objects in a monitored area (20), comprising a light emitter (12) for emitting a light beam (16) into the monitored area (20), a light receiver (26) for generating a received signal from the light beam (22) remitted from the objects, a rotatable deflection unit (18) for periodically deflecting the light beam (16, 22) to scan the monitored area (20) as it moves, an internal reference target (40) which reflects the emitted light beam (16) within the safety laser scanner (10) back to the light receiver (26) in order to generate a reference signal, and having a control and evaluation unit (36) which is designed to detect objects on the basis of the received signal and to check the operability of the safety laser scanner (10) on the basis of the reference signal,
**characterised in that**
the control and evaluation unit (36) is designed to detect an intensity distribution of the reference signal when the light beam sweeps over the reference target and is further designed to output a warning signal in the event of a deviation in the shape of the intensity distribution of the reference signal from a predefined reference shape of the intensity distribution beyond a predetermined tolerance, and **in that** the control and evaluation unit (36) is designed to derive from the intensity distribution a measure of dew formation on the reference target and the warning signal is a signal which reflects the degree of moisture in the interior of the safety laser scanner.

2. Safety laser scanner (10) according to claim 1, **characterised in that** the reference target is formed as a light guide, wherein the light beam sweeps over a coupling surface of the light guide and the light guide guides the coupled light to the light receiver.

3. Safety laser scanner (10) according to claim 1, **characterised in that** the reference target is designed as a plane target with uniform reflectivity and reflects or remits the light onto the light receiver.

4. Safety laser scanner (10) according to one of the preceding claims, **characterised in that** the tolerance is determined in a teach-in procedure.

5. Safety laser scanner (10) according to one of the preceding claims, which is designed as a rangefinder, in that the control and evaluation unit (36) detects the light transit time between emission and reception of the light beam (16, 22) and determines the distance of an object therefrom, and wherein an angle measurement unit (30, 32) is provided for detecting the angular position of the deflection unit (18).

6. Safety laser scanner (10) according to one of the preceding claims, **characterised in that** the control and evaluation unit (36) is designed to measure the distance to the internal reference target (40) when checking the operability.

7. Safety laser scanner (10) according to one of the preceding claims, which has a safety output (38), **characterised in that** the control and evaluation unit (36) is designed to determine whether an object is located in a protective field within the monitored area (20) in order to output a safety-oriented switching signal via the safety output (38) in response.

8. Safety laser scanner (10) according to claim 7, **characterised in that** the control and evaluation unit (36) is designed to output the safety-oriented switching signal via the safety output (38) if testing of the operability does not result in fault-free operation.

9. Method for detecting objects in a monitored area (20) with a safety laser scanner (10) comprising the steps:
- Emitting a light beam (16) into the monitored area (20) with a light emitter (12),
- generating a reception signal from the light beam (22) remitted by the objects with a light receiver (26),
- periodic deflection of the light beam (16, 22) with a rotatable deflection unit (18) in order to scan the monitored area (20) in the course of the movement,
- generating a reference signal by means of an internal reference target (40) which reflects the emitted light beam (16) within the safety laser scanner (10) back to the light receiver (26),
- detection of objects by means of the received signal as well as checking the functionality of the safety laser scanner (10) by means of the reference signal by means of a control and evaluation unit (36),
**characterised by,**
- detecting an intensity distribution of the reference signal as the light beam passes over the one reference target,
- derive a measure of dew on the reference target from the intensity distribution,
- outputting a warning signal representing the degree of humidity inside the safety laser scanner in case of deviation of the shape of the intensity distribution of the reference signal from a predefined reference shape of the intensity distribution beyond a predetermined tolerance.

## Revendications

1. Scanner laser de sécurité (10) pour détecter des objets dans une zone surveillée (20), comprenant un émetteur de lumière (12) pour émettre un faisceau lumineux (16) dans la zone surveillée (20), un récepteur de lumière (26) pour générer un signal de réception à partir du faisceau lumineux (22) renvoyé par les objets, une unité de déviation rotative (18) pour dévier périodiquement le faisceau lumineux (16, 22) afin de balayer la zone surveillée (20) lors de son déplacement, une cible de référence interne (40) qui réfléchit le rayon lumineux (16) émis à l'intérieur du scanner laser de sécurité (10) vers le récepteur de lumière (26) afin de générer un signal de référence, et avec une unité de commande et d'évaluation (36) qui est conçue pour détecter des objets sur la base du signal reçu et pour contrôler l'aptitude au fonctionnement du scanner laser de sécurité (10) sur la base du signal de référence,
**caractérisé en ce que**
l'unité de commande et d'évaluation (36) est conçue pour détecter une répartition d'intensité du signal de référence lors du balayage de la cible de référence par le faisceau lumineux et est en outre conçue pour émettre un signal d'avertissement en cas d'écart de la forme de la répartition d'intensité du signal de référence par rapport à une forme de référence prédéfinie de la répartition d'intensité au-delà d'une tolérance prédéterminée, et **en ce que** l'unité de commande et d'évaluation (36) est conçue pour déduire de la répartition d'intensité une mesure de la formation de rosée sur la cible de référence et le signal d'avertissement est un signal qui reflète le degré d'humidité à l'intérieur du scanner laser de sécurité.

2. Scanner laser de sécurité (10) selon la revendication 1, **caractérisé en ce que** la cible de référence est formée comme un guide de lumière, dans lequel le faisceau lumineux balaie une surface de couplage du guide de lumière et le guide de lumière guide la lumière couplée vers le récepteur de lumière.

3. Scanner laser de sécurité (10) selon la revendication 1, **caractérisé en ce que** la cible de référence est conçue comme une cible plane à réflectivité uniforme et réfléchit ou renvoie la lumière sur le récepteur de lumière.

4. Scanner laser de sécurité (10) selon l'une des revendications précédentes, **caractérisé en ce que** la tolérance est déterminée dans une procédure d'apprentissage.

5. Scanner laser de sécurité (10) selon l'une des revendications précédentes, qui est conçu comme un télémètre, en ce que l'unité de commande et d'évaluation (36) détecte le temps de passage de la lumière entre l'émission et la réception du rayon lumineux (16, 22) et détermine la distance d'un objet par rapport à celui-ci, et dans lequel une unité de mesure d'angle (30, 32) est prévue pour détecter la position angulaire de l'unité de déviation (18).

6. Scanner laser de sécurité (10) selon l'une des revendications précédentes, **caractérisé en ce que** l'unité de commande et d'exploitation (36) est conçue pour mesurer la distance à la cible de référence interne (40) lors du contrôle de l'opérabilité.

7. Scanner laser de sécurité (10) selon l'une des revendications précédentes, qui présente une sortie de sécurité (38), **caractérisé en ce que** l'unité de commande et d'évaluation (36) est conçue pour déterminer si un objet se trouve dans un champ de protection à l'intérieur de la zone surveillée (20), afin d'émettre en réponse un signal de commutation de sécurité par l'intermédiaire de la sortie de sécurité (38).

8. Scanner laser de sécurité (10) selon la revendication 7, **caractérisé en ce que** l'unité de commande et d'évaluation (36) est conçue pour délivrer le signal de commutation de sécurité par l'intermédiaire de la sortie de sécurité (38) si le contrôle de l'aptitude au fonctionnement n'aboutit pas à un fonctionnement sans défaut.

9. Procédé de détection d'objets dans une zone surveillée (20) avec un scanner laser de sécurité (10) comprenant les étapes suivantes:
- émettre un faisceau lumineux (16) dans la zone surveillée (20) avec un émetteur de lumière (12),
- générer un signal de réception à partir du faisceau lumineux (22) réémis par les objets avec un récepteur de lumière (26),
- la déviation périodique du faisceau lumineux (16, 22) avec une unité de déviation rotative (18) afin de balayer la zone surveillée (20) au cours du mouvement,
- générer un signal de référence au moyen d'une cible de référence interne (40) qui réfléchit le faisceau lumineux émis (16) à l'intérieur du scanner laser de sécurité (10) vers le récepteur de lumière (26),
- la détection d'objets au moyen du signal reçu ainsi que le contrôle de la fonctionnalité du scanner laser de sécurité (10) au moyen du signal de référence par une unité de commande et d'évaluation (36),
**caractérisé par,**
- détecter une distribution d'intensité du signal de référence lorsque le faisceau lumineux passe sur la cible de référence,
- dériver une mesure de la rosée sur la cible de référence à partir de la distribution d'intensité,
- émettre un signal d'avertissement représentant le degré d'humidité à l'intérieur du scanner laser de sécurité en cas de déviation de la forme de la distribution d'intensité du signal de référence par rapport à une forme de référence prédéfinie de la distribution d'intensité au-delà d'une tolérance prédéterminée.
